# EUROPÄISCHE PATENTSCHRIFT

(11) **EP 3 917 809 B1**
(45) Veröffentlichungstag und Bekanntmachung des Hinweises auf die Patenterteilung: **06.12.2023**
(21) Anmeldenummer: 20705137.6
(22) Anmeldetag: 29.01.2020
(51) Int. Cl.: B60R 21/2338, B60R 21/239

(54) **GASSACKMODUL FÜR EIN FAHRZEUGINSASSEN-RÜCKHALTESYSTEM SOWIE VERFAHREN ZUM BETREIBEN EINES FAHRZEUGINSASSEN-RÜCKHALTESYSTEMS MIT EINEM SOLCHEN GASSACKMODUL**
AIRBAG MODULE FOR A VEHICLE OCCUPANT RESTRAINT SYSTEM, AND METHOD FOR OPERATING A VEHICLE OCCUPANT RESTRAINT SYSTEM COMPRISING SUCH AN AIRBAG MODULE
MODULE DE COUSSIN GONFLABLE POUR UN SYSTÈME DE RETENUE D'OCCUPANT DE VÉHICULE AINSI QUE PROCÉDÉ POUR FAIRE FONCTIONNER UN SYSTÈME DE RETENUE D'OCCUPANTS DE VÉHICULE AU MOYEN D'UN TEL MODULE DE COUSSIN GONFLABLE

(30) Priorität: 30.01.2019 DE 102019102372
(43) Veröffentlichungstag der Anmeldung: 08.12.2021
(73) Patentinhaber: Dalphi Metal España, S.A., 36213 Vigo (ES)
(72) Erfinder: UGARTE ALBA, Óscar, 47014 Valladolid (ES)
(74) Vertreter: ZF Patentabteilung - DIPS
(86) Internationale Anmeldenummer: PCT/EP2020/052086
(87) Internationale Veröffentlichungsnummer: WO 2020/157090

(56) Entgegenhaltungen:
- DE-A1-102008 007 656
- DE-A1-102010 001 502
- JP-A- 2002 211 348
- US-A1- 2011 031 723

## Beschreibung

Die Erfindung betrifft ein Gassackmodul für ein Fahrzeuginsassen-Rückhaltesystem mit den Merkmalen im Oberbegriff des Anspruchs 1 sowie ein Verfahren zum Betreiben eines Fahrzeuginsassen-Rückhaltesystems mit einem solchen Gassackmodul, wobei das Gassackmodul einen Gassack zur Rückhaltung eines Fahrzeuginsassen umfasst, einen Gasgenerator zum Befüllen des Gassacks mit Generatorgas, ein Formgebungsfangband zur Beeinflussung der Gassackentfaltungsgeometrie, welches an einem Fangbandende mit dem Gassack verbunden ist, sowie ein Öffnungsfreigabefangband, welches an einem Fangbandende mit einem Abströmöffnungsverschluss des Gassacks verbunden ist und ab einer vorgegebenen Fangbandzugkraft eine Abströmöffnung des Gassacks freigibt.

Die Verwendung von Fangbändern zur Beeinflussung der Außenkontur und/oder des Innendrucks von Gassäcken ist allgemein bekannt. Ferner sind im Stand der Technik bereits zahlreiche Fahrzeuginsassen-Rückhaltesysteme beschrieben, bei denen ein konkretes Fangband durch einen Freigabemechanismus aktiv gelöst werden kann, um abhängig von sensorisch erfassten Randbedingungen wie der Fahrzeugverzögerung, dem Insassengewicht oder der Insassenposition die Rückhaltewirkung des Gassacks zu verbessern.

So ist in der gattungsgemäßen DE 10 2010 001 502 A1 beispielsweise ein Gassackmodul mit den Merkmalen des Oberbegriffes des Anspruchs 1 beschrieben, bei dem ein Begrenzungselement zum zeitweisen Begrenzen eines Gassackvolumens vorgesehen ist, sowie ein Freigabemittel, welches mit dem Begrenzungselement zusammenwirkt und das Begrenzungselement freigeben kann. Ferner ist ein vom Begrenzungselement verschiedenes, bandartiges Anpasselement zum Anpassen des Strömungsquerschnitts einer Abströmöffnung vorgesehen, wobei das Anpasselement so mit dem Begrenzungselement gekoppelt ist, dass es nach Freigabe des Begrenzungselements den Strömungsquerschnitt der Abströmöffnung verändert.

Die DE 10 2008 007 656 A1 zeigt eine Insassenrückhaltevorrichtung mit einem Gassack, der eine Abströmöffnung aufweist und dessen maximale Entfaltungsstrecke in Richtung zu einem Insassen mittels eines Fangbands begrenzt werden kann, wobei ein mit dem Fangband koppelbares Schließmittel vorgesehen ist, durch das die (ursprünglich geöffnete) Abströmöffnung ganz oder teilweise verschließbar ist.

In der US 2011/0031723 A1 ist ein Gassackmodul offenbart, das einen Gassack mit einem nicht-entfalteten Zustand und einem entfalteten Zustand sowie eine Struktur zum Halten des Gassacks aufweist. Ein erster Haltegurt hat dabei ein über ein betätigbares Befestigungselement mit der Struktur verbundenes erstes Ende und ein gegenüberliegendes, mit dem Gassack verbundenes zweites Ende. Ferner weist ein zweiter Haltegurt ein an dem ersten Haltegurt durch eine lösbare Verbindung an einer Stelle zwischen dem ersten und zweiten Ende des ersten Haltegurtes befestigtes, erstes Ende sowie ein mit einem entfaltbaren Abschnitt des Gassacks verbundenes, zweites Ende auf.

Aufgabe der Erfindung ist es, ein Gassackmodul und ein Verfahren zum Betreiben eines Fahrzeuginsassen-Rückhaltesystems mit einem solchen Gassackmodul bereitzustellen, bei dem sich in Abhängigkeit von vorgegebenen Randbedingungen die Form und/oder Härte des aufgeblasenen Gassacks mit geringem Aufwand zuverlässig anpassen lässt, um eine besonders vorteilhafte Rückhaltewirkung zu erzielen.

Erfindungsgemäß wird diese Aufgabe gelöst durch ein Gassackmodul nach Anspruch 1.

Dabei ist das Öffnungsfreigabefangband so mit dem Abströmöffnungsverschluss verbunden, dass es ab einer vorgegebenen Fangbandzugkraft eine Abströmöffnung des Gassacks freigibt, wobei eine sowohl mit dem Formgebungsfangband als auch mit dem Öffnungsfreigabefangband gekoppelte, aktivierbare Fangbandfreigabevorrichtung zur aktiven Freigabe, insbesondere zur gleichzeitigen aktiven Freigabe der Fangbänder vorgesehen ist. Bevorzugt verändert das Formgebungsfangband dabei ohne Beeinflussung einer Abströmöffnung ausschließlich die Gassackentfaltungsgeometrie, insbesondere eine Gassacktiefe.

Bei diesem Gassackmodul sind folglich mehrere Fangbänder mit unterschiedlichen Funktionen (Formgebung/Öffnungsfreigabe) vorgesehen, welche durch eine einzige Fangbandfreigabevorrichtung gemeinsam aktiv freigegeben werden können. Ferner kann eine Abströmöffnung des Gassacks auch passiv freigegeben werden, wenn eine vorgegebene Zugkraft im Öffnungsfreigabefangband überschritten wird. Diese Kombination aus aktiver und passiver Ansteuerung sowie die Verwendung funktional unterschiedlicher Fangbänder ermöglicht mit geringem Aufwand eine besonders vorteilhafte Anpassung der Gassackentfaltung an vorgegebene Randbedingungen, wie im Folgenden noch näher erläutert wird.

In einer Ausführungsform des Gassackmoduls ist die Fangbandfreigabevorrichtung am Gasgenerator oder an einem Modulgehäuse angebracht, sodass das Formgebungsfangband und das Öffnungsfreigabefangband über die Fangbandfreigabevorrichtung lösbar am Gasgenerator oder Modulgehäuse fixiert sind. Sowohl der Gasgenerator als auch das Modulgehäuse des Gassackmoduls sind sowieso vorhandene, stabile Bauteile, an denen eine zuverlässige Befestigung der Fangbänder und der aktivierbaren Fangbandfreigabevorrichtung mit geringem Aufwand problemlos möglich ist.

Vorzugsweise ist das Fangbandende des Öffnungsfreigabefangbands mit dem Abströmöffnungsverschluss durch eine Reißnaht verbunden, welche bei Erreichen der vorgegebenen Fangbandzugkraft aufreißt. Eine solche Reißnaht stellt eine einfache und preiswerte Möglichkeit dar, die Abströmöffnung passiv, das heißt bei Überschreitung einer vorgegebenen Zugkraft im Öffnungsfreigabefangband, freizugeben. Besonders bevorzugt kann die Reißnaht das Fangbandende des Öffnungsfreigabefangbands, den Abströmöffnungsverschluss sowie zusätzlich den Gassack oder ein Halteelement des Gassacks miteinander verbinden. Auf diese Weise wird der Abströmöffnungsverschluss zuverlässig in einer definierten Position am Gassack gehalten, wenn das Öffnungsfreigabefangband bereits vor Erreichen der vorgegebenen Zugkraft aktiv freigegeben wird.

Gemäß einer speziellen Ausführungsvariante des Gassackmoduls sind das Formgebungsfangband und das Öffnungsfreigabefangband einstückig ausgeführt. In diesem Fall kann beispielsweise eines der Fangbänder einstückig vom anderen Fangband abzweigen, oder die beiden Fangbänder gehen im Bereich ihrer Kopplungsstelle mit der Fangbandfreigabevorrichtung einstückig ineinander über.

Die Fangbandfreigabevorrichtung ist vorzugsweise pyrotechnisch betrieben, kann alternativ aber auch elektromotorisch aktivierbar sein.

Besonders bevorzugt handelt es sich bei dem Gassackmodul um ein fahrerseitiges Frontgassackmodul, das beispielsweise im Nabenbereich eines Lenkrads montiert wird. Das Gassackmodul ist jedoch auch anderweitig einsetzbar und kann beispielsweise als Beifahrergassackmodul ausgeführt sein.

Gemäß der Erfindung ist die Abströmöffnung in einem Ausgangszustand des Gassackmoduls geschlossen und ausschließlich passiv freigebbar, indem der Gassack eine vorbestimmte Entfaltungsgeometrie und das Öffnungsfreigabefangband die vorgegebene Fangbandzugkraft erreicht. Dadurch lässt sich über den Aktivierungszeitpunkt der Fangbandfreigabevorrichtung mit geringem Aufwand eine zusätzliche Anpassung der Gassackentfaltung erreichen. Liegt der Aktivierungszeitpunkt nach dem Erreichen der vorgegebenen Fangbandzugkraft im Öffnungsfreigabefangband, so wurde die Abströmöffnung bereits freigegeben und die aktive Freigabe des Öffnungsfreigabefangbands hat auf die Gassackentfaltung insofern keinerlei Auswirkung mehr. Wird das Öffnungsfreigabefangband hingegen bereits vor Erreichen seiner vorgegebenen Fangbandzugkraft aktiv freigegeben, so wird die vorgegebene Fangbandzugkraft unabhängig von der Entfaltungsgeometrie des Gassacks auch nicht mehr erreicht und die Abströmöffnung bleibt dauerhaft geschlossen. Folglich lassen sich mit einer einzigen Fangbandfreigabevorrichtung drei unterschiedliche Anpassungen der Gassackentfaltung realisieren, indem die Fangbandfreigabevorrichtung zu einem frühen Zeitpunkt, zu einem späten Zeitpunkt oder überhaupt nicht aktiviert wird.

Erfindungsgemäß wird die eingangs genannte Aufgabe im Übrigen auch gelöst durch ein Verfahren zum Betreiben eines Fahrzeuginsassen-Rückhaltesystems mit einem oben beschriebenen Gassackmodul, wobei das Fahrzeuginsassen-Rückhaltesystem Sensoren zur Erfassung vorgegebener Parameter umfasst, sowie eine an die Sensoren angeschlossene, elektronische Steuereinheit zur Aktivierung des Gasgenerators und der Fangbandfreigabevorrichtung in Abhängigkeit der Sensorsignale. Das Verfahren weist folgende Schritte auf:
a) Die elektronische Steuereinheit löst aufgrund empfangener Sensorsignale den Gasgenerator aus, um den Gassack mit Generatorgas zu befüllen;
b) die Fangbandfreigabevorrichtung ist erst nach der Auslösung des Gasgenerators aktivierbar und wird abhängig von den erfassten Parametern durch die elektronische Steuereinheit wahlweise aktiviert oder nicht aktiviert.

Gemäß der Erfindung weist das Fahrzeuginsassen-Rückhaltesystem einen Sensor zur Erfassung einer Größe und/oder eines Gewichts des Fahrzeuginsassen auf, wobei die Fangbandfreigabevorrichtung oberhalb einer vorbestimmten Grenzgröße und/oder eines vorbestimmten Grenzgewichts im Schritt b) aktiviert und unterhalb der vorbestimmten Grenzgröße und/oder des vorbestimmten Grenzgewichts im Schritt b) nicht aktiviert wird.

Gemäß der Erfindung weist das Fahrzeuginsassen-Rückhaltesystem ferner einen Sensor zur Erfassung eines automatisierten Fahrmodus und/oder eines Abstands zwischen dem Fahrzeuginsassen und dem Gasgenerator auf, wobei die Fangbandfreigabevorrichtung im automatisierten Fahrmodus und/oder oberhalb eines vorbestimmten Grenzabstands im Schritt b) aktiviert und in einem manuellen Fahrmodus und/oder unterhalb des vorbestimmten Grenzabstands im Schritt b) nicht aktiviert wird.

Erfindungsgemäß erfolgt die Aktivierung der Fangbandfreigabevorrichtung im Schritt b) bei Überschreitung der vorbestimmten Grenzgröße und/oder des vorbestimmten Grenzgewichts des Fahrzeuginsassen früher als bei Erfassung des automatisierten Fahrmodus und/oder bei Überschreitung des vorbestimmten Grenzabstands. Ausgehend vom Zeitpunkt der Auslösung des Gasgenerators können hierzu in der elektronischen Steuereinheit unterschiedliche zeitliche Verzögerungen für die einzelnen Parameter abgelegt sein.

Schließlich umfasst die Erfindung auch ein Fahrzeuginsassen-Rückhaltesystem zur Durchführung des zuvor beschriebenen Verfahrens, mit einem obengenannten Gassackmodul, wobei das Fahrzeuginsassen-Rückhaltesystem ein Lenkrad sowie Sensoren zur Erfassung vorgegebener Parameter und eine an die Sensoren angeschlossene, elektronische Steuereinheit zur Aktivierung des Gasgenerators und der Fangbandfreigabevorrichtung in Abhängigkeit von Sensorsignalen aufweist, wobei das Gassackmodul in einem Nabenbereich des Lenkrads montiert ist.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figuren 1 bis 4 den Gassack-Entfaltungsvorgang eines erfindungsgemäßen Gassackmoduls bei einem kleinen und/oder leichten Fahrzeuginsassen;
- Figuren 5 bis 7 den Gassack-Entfaltungsvorgang des erfindungsgemäßen Gassackmoduls bei einem großen und/oder schweren Fahrzeuginsassen; und
- Figuren 8 bis 12 den Gassack-Entfaltungsvorgang des erfindungsgemäßen Gassackmoduls bei einem großen Abstand zwischen dem Fahrzeuginsassen und dem Gassackmodul.

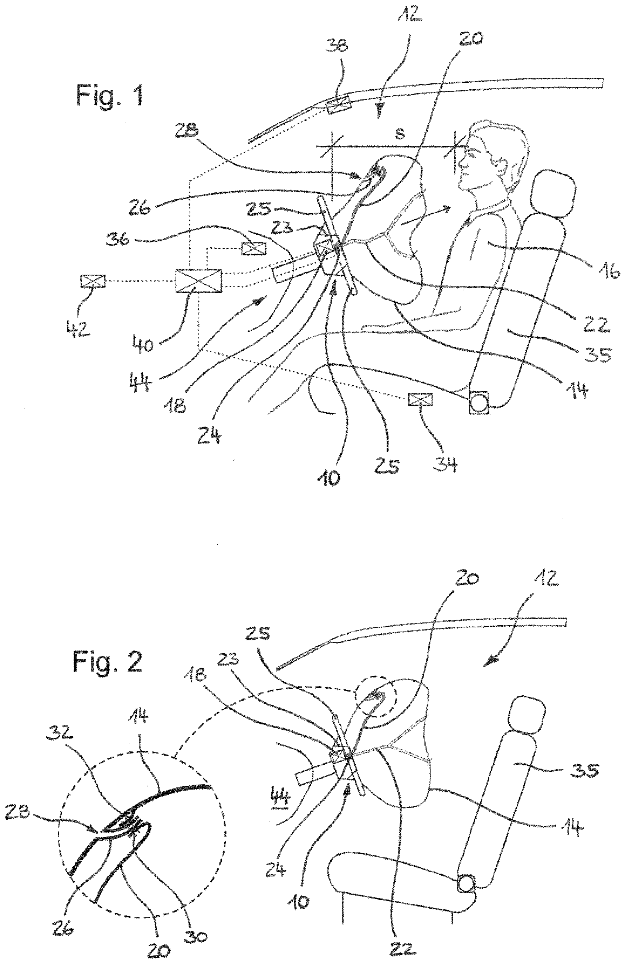

Die Figuren 1 bis 12 zeigen ein Gassackmodul 10 für ein Fahrzeuginsassen-Rückhaltesystem 12, mit einem Gassack 14 zur Rückhaltung eines Fahrzeuginsassen 16, einem Gasgenerator 18 zum Befüllen des Gassacks 14 mit Generatorgas, mehreren Fangbändern 20, 22 und einer mit den Fangbändern 20, 22 gekoppelten, aktivierbaren Fangbandfreigabevorrichtung 24 zur gleichzeitigen aktiven Freigabe der Fangbänder 20, 22.

Das Gassackmodul 10 weist ferner ein schematisch angedeutetes Modulgehäuse 23 auf, welches den gefalteten Gassack 14 und den Gasgenerator 18 im Gehäuseinneren aufnimmt. Die Fangbandfreigabevorrichtung 24 ist eine aus dem Stand der Technik allgemein bekannte, insbesondere pyrotechnisch betriebene Vorrichtung und daher in den Figuren ebenfalls nur schematisch angedeutet. Befestigt ist die Fangbandfreigabevorrichtung 24 an einem stabilen Modulbauteil, beispielsweise am Gasgenerator 18 oder am Modulgehäuse 30, sodass die Fangbänder 20, 22 über die Fangbandfreigabevorrichtung 24 aktiv lösbar an dem stabilen Modulbauteil befestigt sind.

Im dargestellten Ausführungsbeispiel ist das Gassackmodul 10 ein fahrerseitiges Frontgassackmodul, welches im Nabenbereich eines Lenkrads 25 montiert ist, wobei das Gassackmodul 10 hier zwei Fangbänder 20, 22 aufweist, die sich jeweils im Inneren des Gassacks 14 erstrecken. Die Fangbänder 20, 22 sind an einem Fangbandende mit dem Gassack 14 bzw. einem Abströmöffnungsverschluss 26 des Gassacks 14 und an einem entgegengesetzten Fangbandende jeweils mit der Fangbandfreigabevorrichtung 24 verbunden.

Konkret ist ein Öffnungsfreigabefangband 20 vorgesehen, welches am Abströmöffnungsverschluss 26 des Gassacks 14 befestigt ist und ab einer vorgegebenen Fangbandzugkraft eine durch den Abströmöffnungsverschluss 26 verschlossene Abströmöffnung 28 im Gassack 14 freigibt. Durch eine Freigabe der Abströmöffnung 28 kann Generatorgas aus dem Inneren des Gassacks 14 abströmen, sodass sich ein Innendruck verringert und der Gassack 14 weicher wird.

Wie im Detailausschnitt der Figur 2 gut zu erkennen, ist das Fangbandende des Öffnungsfreigabefangbands 20 mit dem Abströmöffnungsverschluss 26 durch eine Reißnaht 30 verbunden, welche bei Erreichen der vorgegebenen Fangbandzugkraft aufreißt.

In der vorliegenden Ausführungsform des Gassackmoduls 10 verbindet die Reißnaht 30 das Fangbandende des Öffnungsfreigabefangbands 20, den Abströmöffnungsverschluss 26 sowie zusätzlich den Gassack 14 oder ein Halteelement 32 des Gassacks 14 miteinander. Dadurch wird der Abströmöffnungsverschluss 26 auch dann zuverlässig in einer definierten Position am Gassack 14 gehalten, wenn das Öffnungsfreigabefangband 20 vor Erreichen der vorgegebenen Fangbandzugkraft aktiv freigegeben wird.

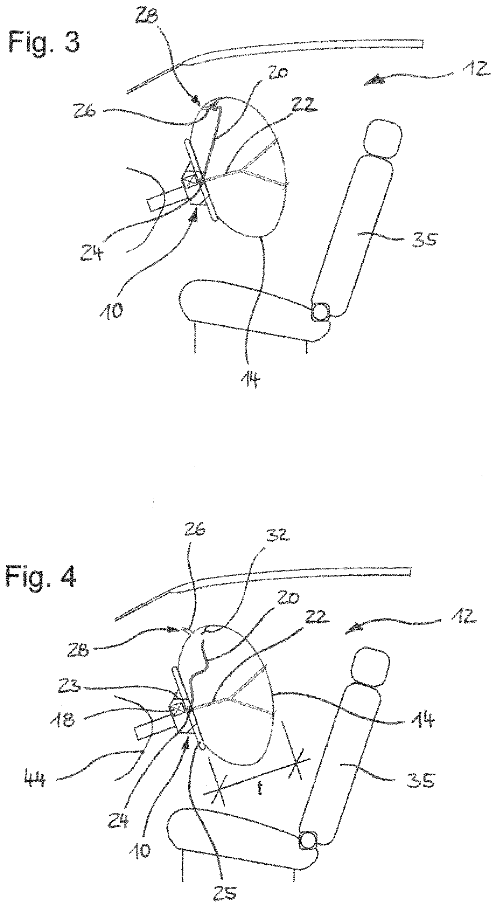

Der Abströmöffnungsverschluss 26 ist hier ein rüsselartiger Fortsatz an der Abströmöffnung 28. Ist der Abströmöffnungsverschluss 26 im Inneren des Gassacks 14 gehalten, wird der rüsselartige Fortsatz beim Aufblasen des Gassacks 14 durch den Gassackinnendruck zusammengedrückt, sodass die Abströmöffnung 28 im Wesentlichen geschlossen bleibt. Sobald der Abströmöffnungsverschluss 26 nicht mehr im Inneren des Gassacks 14 gehalten ist, wird der rüsselartige Fortsatz beim Aufblasen des Gassacks 14 durch den Gassackinnendruck nach außen gestülpt, sodass Generatorgas über die Abströmöffnung 28 und den rüsselartigen Fortsatz nach außerhalb des Gassacks 14 abströmen kann (siehe zum Beispiel Figur 4).

Ferner ist ein Formgebungsfangband 22 vorgesehen, welches am Gassack 14, insbesondere an einem dem Fahrzeuginsassen 16 zugewandten Frontabschnitt des Gassacks 14 befestigt ist und die Gassackentfaltungsgeometrie, insbesondere eine Gassacktiefe t des Gassacks 14 beeinflussen kann.

Das Öffnungsfreigabefangband 20 und das Formgebungsfangband 22 sind gemäß Figur 1 zwei separate Fangbänder, die an einem Fangbandende jeweils mit der Fangbandfreigabevorrichtung 24 (lösbar) gekoppelt sind, wobei sich das Formgebungsfangband 22 dann verzweigt und mehrere entgegengesetzte Fangbandenden aufweist, welche am Frontabschnitt des Gassacks 14 befestigt sind.

Alternativ ist auch denkbar, dass das Öffnungsfreigabefangband 20 und das Formgebungsfangband 22 einstückig ausgeführt sind. In diesem Fall gehen die beiden Fangbänder 20, 22 dann beispielsweise im Bereich ihrer Kopplungsstelle mit der Fangbandfreigabevorrichtung 24 einstückig ineinander über.

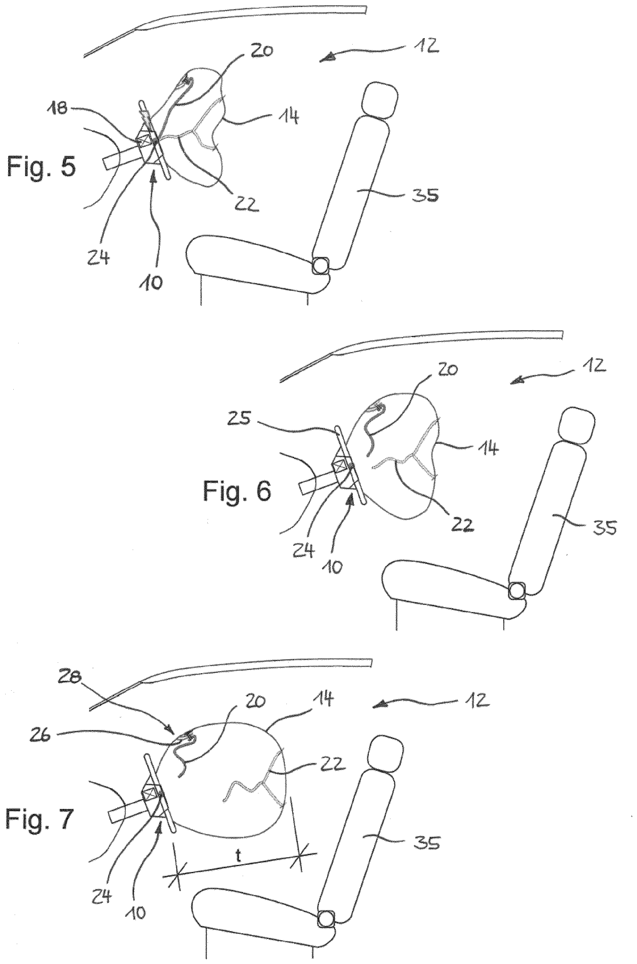

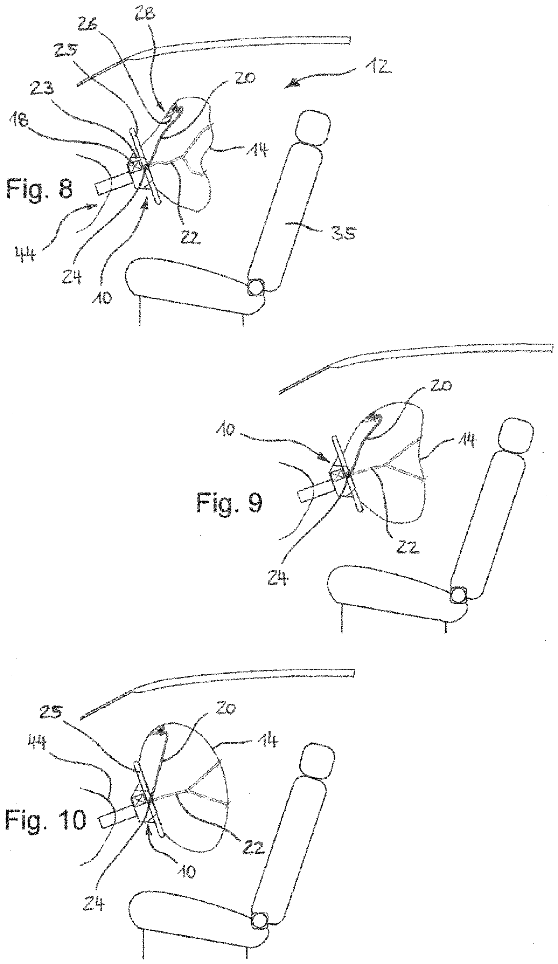

Im dargestellten Ausführungsbeispiel ist die Abströmöffnung 28 in einem Ausgangszustand des Gassackmoduls 10 geschlossen und ausschließlich passiv freigebbar, indem der Gassack 14 eine vorbestimmte Entfaltungsgeometrie und das Öffnungsfreigabefangband 20 die vorgegebene Fangbandzugkraft erreicht. Dadurch lässt sich über den Aktivierungszeitpunkt der Fangbandfreigabevorrichtung 24 mit geringem Aufwand eine zusätzliche Anpassung der Gassackentfaltung erreichen. Liegt der Aktivierungszeitpunkt nach dem Erreichen der vorgegebenen Fangbandzugkraft im Öffnungsfreigabefangband, wurde die Abströmöffnung 28 bereits passiv freigegeben und die aktive Freigabe des Öffnungsfreigabefangbands 20 hat auf die Gassackentfaltung insofern keinerlei Auswirkung mehr. Wird das Öffnungsfreigabefangband 20 hingegen bereits vor Erreichen seiner vorgegebenen Fangbandzugkraft aktiv freigegeben, so wird die vorgegebene Fangbandzugkraft unabhängig von der Entfaltungsgeometrie des Gassacks 14 auch nicht mehr erreicht und die Abströmöffnung 28 bleibt dauerhaft geschlossen. Folglich lassen sich mit einer einzigen Fangbandfreigabevorrichtung 24 drei unterschiedliche Anpassungen der Gassackentfaltung realisieren, indem die Fangbandfreigabevorrichtung 24 zu einem späten Zeitpunkt (vgl. Figuren 8 bis 12), zu einem frühen Zeitpunkt (vgl. Figuren 5 bis 7) oder überhaupt nicht (vgl. Figuren 1 bis 4) aktiviert wird.

Im Folgenden wird anhand der Figuren auf das Verfahren zum Betreiben des Fahrzeuginsassen-Rückhaltesystems 12 eingegangen.

Das Fahrzeuginsassen-Rückhaltesystem 12 umfasst gemäß Figur 1 Sensoren 34, 36, 38, 42 zur Erfassung vorgegebener Parameter sowie eine an die Sensoren 34, 36, 38, 42 angeschlossene, elektronische Steuereinheit 40 zur Aktivierung des Gasgenerators 18 und der Fangbandfreigabevorrichtung 24 in Abhängigkeit der Sensorsignale.

Im Crashfall löst die elektronische Steuereinheit 40 aufgrund empfangener Sensorsignale den Gasgenerator 18 aus, um den Gassack 14 mit Generatorgas zu befüllen (Verfahrensschritt a).

Die Fangbandfreigabevorrichtung 24 ist erst nach der Auslösung des Gasgenerators 18 aktivierbar und wird abhängig von den erfassten Parametern durch die elektronische Steuereinheit 40 wahlweise aktiviert oder nicht aktiviert (Verfahrensschritt b).

Im dargestellten Ausführungsbeispiel weist das Fahrzeuginsassen-Rückhaltesystem 12 einen Sensor 34 zur Erfassung einer Größe und/oder eines Gewichts des Fahrzeuginsassen 16 auf, wobei die Fangbandfreigabevorrichtung 24 oberhalb einer vorbestimmten Grenzgröße und/oder eines vorbestimmten Grenzgewichts im Schritt b) aktiviert und unterhalb der vorbestimmten Grenzgröße und/oder des vorbestimmten Grenzgewichts im Schritt b) nicht aktiviert wird. Der Sensor 34 ist insbesondere in einem Fahrzeugsitz 35 des Fahrzeuginsassen 16 angeordnet und erfasst beispielsweise eine Sitzeinstellung und/oder ein Insassengewicht.

Die Figuren 1 bis 4 zeigen den Entfaltungsvorgang des Gassacks 14 für einen kleinen und/oder leichten Fahrzeuginsassen 16. Gemäß Figur 1 wird in allgemein bekannter Weise ein Fahrzeugcrash erfasst, beispielsweise durch einen Crashsensor 42, und nachfolgend der Gasgenerator 18 ausgelöst, um den Gassack 14 aufzublasen. Der Sensor 34 erfasst, dass der Fahrzeuginsasse 16 die vorbestimmte Grenzgröße und/oder das vorbestimmte Grenzgewicht unterschreitet, sodass die elektronische Steuereinheit 40 die Fangbandfreigabevorrichtung 24 bei der Gassackentfaltung gemäß Figur 2 nicht aktiviert.

Das Formgebungsfangband 22 verhindert in diesem Fall eine freie Gassackentfaltung, sodass sich gemäß Figur 3 nur eine geringe Gassacktiefe t ausbilden kann. Die Abströmöffnung 28 bleibt zunächst geschlossen, wobei sich das Öffnungsfreigabefangband 20 bei der Entfaltung des Gassacks 14 spannt, bis die Reißnaht 30 bei Erreichen der vorgegebenen Fangbandzugkraft schließlich aufreißt und die Abströmöffnung 28 freigibt (Figur 4). Durch die Freigabe der Abströmöffnung 28 wird ein relativ weicher Gassack 14 bereitgestellt, der sich bei der Rückhaltung eines kleinen und/oder leichten Fahrzeuginsassen 16 als vorteilhaft erwiesen hat.

Demgegenüber zeigen die Figuren 5 bis 7 den Entfaltungsvorgang des Gassacks 14 für einen großen und/oder schweren Fahrzeuginsassen 16. Zunächst wird wiederum ein Fahrzeugcrash erfasst und daraufhin der Gasgenerator 18 ausgelöst, um den Gassack 14 aufzublasen. Der Sensor 34 erkennt, dass der Fahrzeuginsasse 16 die vorbestimmte Grenzgröße und/oder das vorbestimmte Grenzgewicht überschreitet, sodass die elektronische Steuereinheit 40 kurz nach der Auslösung des Gasgenerators 18 und noch während der Gassackentfaltung die Fangbandfreigabevorrichtung 24 aktiviert, wie in Figur 5 angedeutet. Folglich wird das Formgebungsfangband 22 gemäß Figur 6 gelöst, sodass der Gassack 14 eine große Gassacktiefe t ausbildet (Figur 7). Ferner wird auch das Öffnungsfreigabefangband 20 gelöst, sodass sich bei der Gassackentfaltung keine Fangbandzugkraft aufbauen kann. Folglich bleibt der als rüsselartiger Fortsatz ausgebildete Abströmöffnungsverschluss 26 durch die Reißnaht 30 am Halteelement 32 im Inneren des Gassacks 14 fixiert und die Abströmöffnung 28 entsprechend geschlossen, sodass eine ausreichende Gassackhärte für die Rückhaltung eines großen und/oder schweren Fahrzeuginsassen 16 sichergestellt ist.

Das Fahrzeuginsassen-Rückhaltesystem 12 weist im dargestellten Ausführungsbeispiel ferner einen Sensor 36 zur Erfassung eines automatisierten Fahrmodus sowie einen Sensor 38 zur Erfassung eines Abstands s zwischen dem Fahrzeuginsassen 16 und dem Gasgenerator 18 auf (siehe Figur 1), wobei die Fangbandfreigabevorrichtung 24 im automatisierten Fahrmodus und/oder oberhalb eines vorbestimmten Grenzabstands im Schritt b) aktiviert und in einem manuellen Fahrmodus und/oder unterhalb des vorbestimmten Grenzabstands im Schritt b) nicht aktiviert wird.

Die Figuren 8 bis 12 zeigen den Entfaltungsvorgang des Gassacks 14 in einem automatisierten Fahrmodus des Fahrzeugs und/oder bei einem großen Abstand s zwischen dem Fahrzeuginsassen 16 und dem Gasgenerator 18. Die Erfassung des automatisierten Fahrmodus korreliert in der Regel mit einem großen Abstand s, da sich der Fahrzeuginsasse 16 häufig in einer entspannten, zurückgelehnten Sitzposition befindet und/oder das Lenkrad 25 aus Komfortgründen zu einer Armaturentafel 44 hin zurückgezogen ist.

Nach der Erfassung eines Fahrzeugcrashs läuft der Entfaltungsvorgang gemäß den Figuren 8 bis 11 zunächst genauso ab, wie für die Figuren 1 bis 4 beschreiben, sodass sich am Anfang ein eher weicher Gassack 14 mit geringer Gassacktiefe t ausbildet.

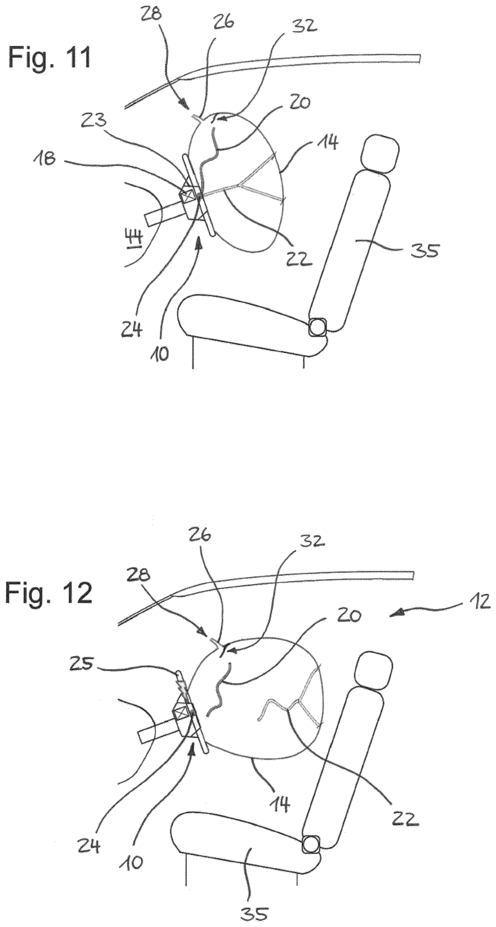

Infolge des großen Abstands s ist auch keine große Gassackhärte notwendig, da genügend Weg für ein langsameres Abbremsen des Fahrzeuginsassen 16 zur Verfügung steht. Um den großen Abstand s möglichst gut für die Insassenrückhaltung auszunutzen, wird schließlich gemäß Figur 12 die Fangbandfreigabevorrichtung 24 von der elektronischen Steuereinheit 40 aktiviert, um die beiden Fangbänder 20, 22 freizugeben. Auf diese Weise entsteht ein relativ weicher Gassack 14 mit großer Gassacktiefe t, der eine verhältnismäßig sanfte Rückhaltung des Fahrzeuginsassen 16 ermöglicht.

Wichtig ist in diesem Fall, dass die Aktivierung der Fangbandfreigabevorrichtung 24 erst dann erfolgt, wenn bereits die vorgegebene Fangbandzugkraft im Öffnungsfreigabefangband 20 überschritten und dadurch die Reißnaht 30 aufgerissen sowie die Abströmöffnung 28 freigegeben wurde.

Anhand der obigen Erläuterungen ist klar, dass bei Erfassung eines großen und/oder schweren Fahrzeuginsassen 16 gemäß den Figuren 5 bis 7 die Aktivierung der Fangbandfreigabevorrichtung 24 im Schritt b) früher erfolgt als bei Erfassung des automatisierten Fahrmodus und/oder bei Überschreitung des vorbestimmten Grenzabstands. Hierzu können in der elektronischen Steuereinheit für die einzelnen sensorisch erfassten Parameter unterschiedliche, individuell angepasste zeitliche Verzögerungen zwischen der Auslösung des Gasgenerators 18 und der Aktivierung der Fangbandfreigabevorrichtung 24 hinterlegt sein.

Wird ein automatisierter Fahrmodus und/oder eine Überschreitung des vorbestimmten Grenzabstands erfasst, so wird durch die elektronische Steuereinheit 40 ein Entfaltungsvorgang des Gassacks 14 gemäß den Figuren 8 bis 12 eingeleitet, insbesondere für alle Fahrzeuginsassen 16, unabhängig von deren Größe und/oder Gewicht. Aufgrund des großen Abstands s kann nämlich auch bei kleinen und/oder leichten Personen die größere Gassacktiefe t genutzt werden, um den Fahrzeuginsassen 16 in vorteilhafter Weise langsamer abzubremsen und damit sanfter zurückzuhalten.

Insgesamt wird in den Figuren 1 bis 12 beispielhaft ein Fahrzeuginsassen-Rückhaltesystem 12 vorgeschlagen, das gemäß dem zuvor beschriebenen Verfahren betrieben wird, mit einem oben beschriebenen Gassackmodul 10, einem Lenkrad 25 sowie Sensoren 34, 36, 38, 42 zur Erfassung vorgegebener Parameter und einer an die Sensoren 34, 36, 38, 42 angeschlossenen, elektronischen Steuereinheit 40 zur Aktivierung des Gasgenerators 18 und der Fangbandfreigabevorrichtung 24 in Abhängigkeit von Sensorsignalen, wobei das Gassackmodul 10 im Nabenbereich des Lenkrads 25 montiert ist.

## Patentansprüche

1. Gassackmodul für ein Fahrzeuginsassen-Rückhaltesystem (12), mit
einem Gassack (14) zur Rückhaltung eines Fahrzeuginsassen (16),
einem Gasgenerator (18) zum Befüllen des Gassacks (14) mit Generatorgas,
einem Formgebungsfangband (22) zur Beeinflussung der Gassackentfaltungsgeometrie, welches an einem Fangbandende mit dem Gassack (14) verbunden ist, sowie
einem Öffnungsfreigabefangband (20), welches an einem Fangbandende mit einem Abströmöffnungsverschluss (26) des Gassacks (14) verbunden ist,
wobei das Öffnungsfreigabefangband (20) so mit dem Abströmöffnungsverschluss (26) verbunden ist, dass es ab einer vorgegebenen Fangbandzugkraft eine Abströmöffnung (28) des Gassacks (14) freigibt, und
wobei eine sowohl mit dem Formgebungsfangband (22) als auch mit dem Öffnungsfreigabefangband (20) gekoppelte, aktivierbare Fangbandfreigabevorrichtung (24) zur aktiven Freigabe der Fangbänder (20, 22) vorgesehen ist,
wobei die Fangbandfreigabevorrichtung (24) an einem stabilen Modulbauteil des Gassackmoduls (10) und die beiden Fangbänder (20, 22) über die Fangbandfreigabevorrichtung (24) aktiv lösbar an dem stabilen Modulbauteil befestigt sind,
**dadurch gekennzeichnet, dass** die Abströmöffnung (28) in einem Ausgangszustand des Gassackmoduls (10) geschlossen und ausschließlich passiv freigebbar ist, indem der Gassack (14) eine vorbestimmte Entfaltungsgeometrie und das Öffnungsfreigabefangband (20) die vorgegebene Fangbandzugkraft erreicht.

2. Gassackmodul nach Anspruch 1, **dadurch gekennzeichnet, dass** die Fangbandfreigabevorrichtung (24) am Gasgenerator (18) oder an einem Modulgehäuse (23) angebracht ist, sodass das Formgebungsfangband (22) und das Öffnungsfreigabefangband (20) über die Fangbandfreigabevorrichtung (24) lösbar am Gasgenerator (18) oder Modulgehäuse (23) fixiert sind.

3. Gassackmodul nach einem der vorhergehenden Ansprüche, **dadurch gekennzeichnet, dass** das Fangbandende des Öffnungsfreigabefangbands (20) mit dem Abströmöffnungsverschluss (26) durch eine Reißnaht (30) verbunden ist, welche bei Erreichen der vorgegebenen Fangbandzugkraft aufreißt.

4. Gassackmodul nach einem der vorhergehenden Ansprüche, **dadurch gekennzeichnet, dass** das Formgebungsfangband (22) und das Öffnungsfreigabefangband (20) einstückig ausgeführt sind.

5. Gassackmodul nach einem der vorhergehenden Ansprüche, **dadurch gekennzeichnet, dass** die Fangbandfreigabevorrichtung (24) pyrotechnisch betrieben ist.

6. Gassackmodul nach einem der vorhergehenden Ansprüche, **dadurch gekennzeichnet, dass** das Gassackmodul (10) ein fahrerseitiges Frontgassackmodul ist.

7. Verfahren zum Betreiben eines Fahrzeuginsassen-Rückhaltesystems (12) mit einem Gassackmodul (10) nach einem der vorhergehenden Ansprüche, wobei das Fahrzeuginsassen-Rückhaltesystem (12) Sensoren (34, 36, 38, 42) zur Erfassung vorgegebener Parameter umfasst, sowie eine an die Sensoren (34, 36, 38, 42) angeschlossene, elektronische Steuereinheit (40) zur Aktivierung des Gasgenerators (18) und der Fangbandfreigabevorrichtung (24) in Abhängigkeit von Sensorsignalen, wobei das Verfahren folgende Schritte aufweist:
a) Die elektronische Steuereinheit (40) löst aufgrund empfangener Sensorsignale den Gasgenerator (18) aus, um den Gassack (14) mit Generatorgas zu befüllen;
b) die Fangbandfreigabevorrichtung (24) ist erst nach der Auslösung des Gasgenerators (18) aktivierbar und wird abhängig von den erfassten Parametern durch die elektronische Steuereinheit (40) wahlweise aktiviert oder nicht aktiviert,
wobei das Fahrzeuginsassen-Rückhaltesystem (12) einen Sensor (34) zur Erfassung einer Größe und/ oder eines Gewichts des Fahrzeuginsassen (16) aufweist, wobei die Fangbandfreigabevorrichtung (24) oberhalb einer vorbestimmten Grenzgröße und/oder eines vorbestimmten Grenzgewichts im Schritt b) aktiviert und unterhalb der vorbestimmten Grenzgröße und/oder des vorbestimmten Grenzgewichts im Schritt b) nicht aktiviert wird,
wobei das Fahrzeuginsassen-Rückhaltesystem (12) einen Sensor (36, 38) zur Erfassung eines automatisierten Fahrmodus und/oder eines Abstands (s) zwischen dem Fahrzeuginsassen und dem Gasgenerator (18) aufweist, wobei die Fangbandfreigabevorrichtung (24) im automatisierten Fahrmodus und/oder oberhalb eines vorbestimmten Grenzabstands im Schritt b) aktiviert und in einem manuellen Fahrmodus und/oder unterhalb des vorbestimmten Grenzabstands im Schritt b) nicht aktiviert wird, und
wobei bei Überschreitung der vorbestimmten Grenzgröße und/oder des vorbestimmten Grenzgewichts des Fahrzeuginsassen (16) die Aktivierung der Fangbandfreigabevorrichtung (24) im Schritt b) früher erfolgt als bei Erfassung des automatisierten Fahrmodus und/oder bei Überschreitung des vorbestimmten Grenzabstands.

8. Fahrzeuginsassen-Rückhaltesystem (12) zur Durchführung des Verfahrens nach Anspruch 7, mit einem Gassackmodul (10) nach einem der Ansprüche 1 bis 6, **gekennzeichnet durch** ein Lenkrad (25), durch Sensoren (34, 36, 38, 42) zur Erfassung vorgegebener Parameter sowie durch eine an die Sensoren (34, 36, 38, 42) angeschlossene, elektronische Steuereinheit (40) zur Aktivierung des Gasgenerators (18) und der Fangbandfreigabevorrichtung (24) in Abhängigkeit von Sensorsignalen, wobei das Gassackmodul (10) in einem Nabenbereich des Lenkrads (25) montiert ist.

## Claims

1. An airbag module for a vehicle occupant restraint system (12), comprising
an airbag (14) for restraining a vehicle occupant (16),
an inflator (18) for filling the airbag (14) with inflator gas,
a shaping tether (22) for influencing the airbag deployment geometry which is connected to the airbag (14) at one tether end, and
a port release tether (20) which is connected to a discharge port closure (26) of the airbag (14) at one tether end,
wherein the port release tether (20) is connected to the discharge port closure (26) so that it releases a discharge port (28) of the airbag (14) from a predetermined tensile tether force,
wherein an activatable tether release device (24) coupled both to the shaping tether (22) and to the port release tether (20) is provided for active release of the tethers (20, 22),
**characterized in that** the discharge port (28) is closed in an initial state of the airbag module (10) and can be exclusively released passively while the airbag (14) reaches a predetermined deployment geometry and the port release tether (20) reaches the predetermined tensile tether force.

2. The airbag module according to claim 1, **characterized in that** the tether release device (24) is arranged at the inflator (18) or at a module housing (23) so that the shaping tether (22) and the port release tether (20) are detachably fixed on the inflator (18) or the module housing (23) via the tether release device (24).

3. The airbag module according to any one of the preceding claims, **characterized in that** the tether end of the port release tether (20) is connected to the discharge port closure (26) by a tear seam (30) which tears when the predetermined tensile tether force is reached.

4. The airbag module according to any one of the preceding claims, **characterized in that** the shaping tether (22) and the port release tether (20) are integrally formed.

5. The airbag module according to any one of the preceding claims, **characterized in that** the tether release device (24) is pyrotechnically operated.

6. The airbag module according to any one of the preceding claims, **characterized in that** the airbag module (10) is a driver-side front airbag module.

7. A method of operating a vehicle occupant restraint system (12) comprising an airbag module (10) according to any one of the preceding claims, wherein the vehicle occupant restraint system (12) comprises sensors (34, 36, 38, 42) for detecting predetermined parameters as well as an electronic control unit (40) connected to the sensors (34, 36, 38, 42) for activating the inflator (18) and the tether release device (24) in response to sensor signals, the method including the following steps:
a) the electronic control unit (40) triggers the inflator (18) based on received sensor signals so as to fill the airbag (14) with inflator gas;
b) the tether release device (24) cannot be activated before the inflator (18) has been triggered and is optionally activated or not activated by the electronic control unit (40) in response to the detected parameters,
wherein the vehicle occupant restraint system (12) includes a sensor (34) for detecting a size and/or a weight of the vehicle occupant (16), wherein the tether release device (24) is activated above a predetermined limit size and/or a predetermined limit weight in step b) and is not activated below the predetermined limit size and/or the predetermined limit weight in step b),'
wherein the vehicle occupant restraint system (12) includes a sensor (36, 38) for detecting an automated driving mode and/or a distance (s) between the vehicle occupant and the inflator (18), wherein the tether release device (24) is activated in the automated driving mode and/or above a predetermined limit distance in step b) and is not activated in a manual driving mode and/or below the predetermined limit distance in step b), and
wherein, when the predetermined limit size and/or the predetermined limit weight of the vehicle occupant (16) is exceeded, the tether release device (24) is activated in step b) earlier than when the automated driving mode is detected and/or when the predetermined limit distance is exceeded.

8. A vehicle occupant restraint system (12) for the implementation of the method according to claim7 comprising an airbag module (10) according to any one of the claims 1 to 6, **characterized by** a steering wheel (25), sensors (34, 36, 38, 42) for detecting predetermined parameters as well as by an electronic control unit (40) connected to the sensors (34, 36, 38, 42) for activating the inflator (18) and the tether release device (24) in response to the sensor signals, the airbag module (10) being mounted in a hub area of the steering wheel (25).

## Revendications

1. Module airbag pour un système de retenue de passager de véhicule (12), comprenant
un coussin gonflable(14) pour retenir un occupant du véhicule (16),
un générateur de gaz (18) pour remplir le coussin gonflable (14) avec du gaz de générateur,
une sangle de maintien en une forme donnée (22) pour influencer la géométrie de déploiement du coussin gonflable, laquelle est reliée au coussin gonflable (14) à une extrémité de la sangle de maintien, ainsi que
une sangle de maintien pour libération de l'ouverture (20), laquelle est reliée à une extrémité de la sangle de maintien avec une fermeture de l'ouverture d'évacuation (26) du coussin gonflable (14),
pour lequel la sangle de maintien de libération de l'ouverture (20) est reliée à la fermeture de l'ouverture d'évacuation (26) de telle sorte qu'elle libère une ouverture d'évacuation (28) du coussin gonflable (14) à partir d'une force de traction de sangle de maintien prédéfinie, et
pour lequel dispositif de libération de sangle de maintien (24) activable, couplé aussi bien avec la sangle de maintien en une forme donnée (22) qu'avec la sangle de maintien de libération de l'ouverture (20), es prévu pour la libération active des sangles de maintien (20, 22),
pour lequel le dispositif de libération de sangle de maintien (24) est fixé à un composant fixe du module airbag (10) et les deux sangles de maintien (20, 22) sont fixées de manière active et amovible au composant fixe du module par l'intermédiaire du dispositif de libération de sangle de maintien (24),
**caractérisé en ce que** l'ouverture d'évacuation (28) est fermée dans un état sorti du module airbag (10) et peut être libérée exclusivement de manière passive, lorsque le coussin gonflable (14) atteint une géométrie de déploiement prédéterminée et la sangle de maintien de libération d'ouverture (20) atteint la force de traction de la sangle de maintien prédéterminée.

2. Module airbag selon la revendication 1, **caractérisé en ce que** le dispositif de libération de la sangle de maintien (24) est monté sur le générateur de gaz (18) ou sur un boîtier de module (23), de sorte que la sangle de maintien en une forme donnée (22) et la sangle de maintien de libération d'ouverture (20) sont fixées de manière amovible au générateur de gaz (18) ou au boîtier de module (23) par le dispositif de libération de la sangle de maintien (24).

3. Module airbag selon l'une des revendications précédentes, **caractérisé en ce que** l'extrémité de la sangle de maintien de libération d'ouverture (20) est reliée à la fermeture d'ouverture d'évacuation (26) par une couture de déchirure (30) laquelle se déchire lorsque la force de traction de la sangle de maintien prédéfinie est atteinte.

4. Module airbag selon l'une des revendications précédentes, **caractérisé en ce que** la sangle de maintien en une forme donnée (22) et la sangle de maintien de libération d'ouverture (20) sont réalisées d'une seule pièce.

5. Module airbag selon l'une des revendications précédentes, **caractérisé en ce que** le dispositif de libération de la sangle de maintien (24) fonctionne par pyrotechnie.

6. Module airbag selon l'une des revendications précédentes, **caractérisé en ce que** le module airbag (10) est un module airbag frontal côté conducteur.

7. Procédé pour faire fonctionner un système de retenue des occupants d'un véhicule (12) avec un module airbag (10) selon l'une des revendications précédentes, pour lequel le système de retenue des occupants d'un véhicule (12) comprend des capteurs (34, 36, 38, 42) pour détecter des paramètres prédéfinis, ainsi qu'une unité de commande électronique (40) raccordée aux capteurs (34, 36, 38, 42) pour activer le générateur de gaz (18) et le dispositif de libération de la sangle de maintien (24) en fonction des signaux des capteurs, pour lequel le procédé présente les étapes suivantes :
a) l'unité de commande électronique (40) déclenche le générateur de gaz (18) sur la base des signaux de capteur reçus, afin de remplir le coussin gonflable(14) avec du gaz de générateur;
b) le dispositif de libération de la sangle de maintien (24) ne peut être activé qu'après le déclenchement du générateur de gaz (18) et est activé ou non, au choix, par l'unité de commande électronique (40) en fonction des paramètres détectés,
pour lequel le système de retenue d'occupant de véhicule (12) présente un capteur (34) pour détecter une taille et/ou un poids de l'occupant de véhicule (16), pour lequel le dispositif de libération de la sangle maintien (24) est activé au-dessus d'une taille limite prédéterminée et/ou d'un poids limite prédéterminé à l'étape b) et n'est pas activé en dessous de la taille limite prédéterminée et/ou du poids limite prédéterminé à l'étape b),
pour lequel le système de retenue des occupants du véhicule (12) présente un capteur (36, 38) pour la détection d'un mode de conduite automatisé et/ou d'une distance (s) entre l'occupant du véhicule et le générateur de gaz (18),pour lequel le dispositif de libération de la sangle de maintien (24) est activé dans le mode de conduite automatisé et/ou au-dessus d'une distance limite prédéterminée à l'étape b) et n'est pas activé dans un mode de conduite manuel et/ou en dessous de la distance limite prédéterminée à l'étape b), et
pour lequel en cas de dépassement de la taille limite prédéterminée et/ou du poids limite prédéterminé du passager (16) du véhicule, l'activation du dispositif de libération de la sangle de maintien (24) à l'étape b) a lieu plus tôt que lors de la détection du mode de conduite automatisé et/ou en cas de dépassement de la distance limite prédéterminée.

8. Système de retenue des occupants d'un véhicule (12) pour la mise en oeuvre du procédé selon la revendication 7, comprenant un module airbag (10) selon l'une des revendications 1 à 6, **caractérisé par** un volant de direction (25), par des capteurs (34, 36, 38, 42) pour la détection de paramètres prédéfinis ainsi que par une unité de commande électronique (40) connectée aux capteurs (34, 36, 38, 42) pour activer le générateur de gaz (18) et le dispositif de libération de la sangle de maintien (24) en fonction de signaux de capteurs, pour lequel le module airbag (10) est monté dans une zone du moyeu du volant (25).
